(19) Europäisches Patentamt
European Patent Office
Office européen des brevets

(11) Veröffentlichungsnummer: **0 507 152 A2**

(12) **EUROPÄISCHE PATENTANMELDUNG**

(21) Anmeldenummer: **92104742.9**

(22) Anmeldetag: **19.03.92**

(51) Int. Cl.$^5$: **C08G 18/67**, C08J 5/08, C08K 7/14, C08F 283/00, B29D 23/00, B32B 19/00

(30) Priorität: **03.04.91 DE 4110713**

(43) Veröffentlichungstag der Anmeldung: **07.10.92 Patentblatt 92/41**

(84) Benannte Vertragsstaaten: **AT DE ES FR GB IT SE**

(71) Anmelder: **BASF Aktiengesellschaft**
**Carl-Bosch-Strasse 38**
**W-6700 Ludwigshafen(DE)**

(72) Erfinder: **Schuermann, Helmut, Dr.**
**Burgunderstrasse 13**
**W-6701 Maxdorf(DE)**
Erfinder: **Cramer, Edwin, Dr.**
**Hohenzollernstrasse 87a**
**W-6700 Ludwigshafen(DE)**
Erfinder: **Fischer, Paul**
**Friedelsheimer Strasse 4**
**W-6701 Niederkirchen(DE)**

(54) **Rohrförmige Bauteile aus Faserverbundwerkstoffen.**

(57) Rohrförmige Bauteile für Transportfahrzeuge bestehen aus 30 - 70 Vol.-% orientierter Verstärkungsfasern und 70 - 30 Vol.-% eines gehärteten Vinylesterurethanharzes.

EP 0 507 152 A2

Die Erfindung betrifft rohrförmige Bauteile auf Basis von Vinylesterurethanharzen.

In zunehmendem Maße wird versucht, hochbeanspruchte Komponenten in Transportfahrzeugen, z.B. Antriebswellen, statt aus Stahl aus den wesentlich leichteren Faser/Kunststoff-Verbundwerkstoffen herzustellen.

Als Kunststoffmatrix für die Faserverbundwerkstoffe wurden bisher praktisch ausschließlich Epoxidharze eingesetzt. Diese haben jedoch den Nachteil, daß die Härtung verhältnismäßig lang dauert, so daß lange Zykluszeiten erforderlich sind. Außerdem müssen wegen toxischer Härtungsmittel in vielen Fällen besondere Vorkehrungen bei der Verarbeitung getroffen werden. Auch die radikalisch härtbaren Vinylesterharze (Umsetzungsprodukte von Polyepoxiden mit Methacrylsäure) wurden schon als geeignete Kunststoffmatrix vorgeschlagen. Hier ist jedoch die Haftfestigkeit Faser/Matrix bei hoher Torsionsbeanspruchung nicht ausreichend.

Der Erfindung lag daher die Aufgabe zugrunde, rohrförmige, torsionsbeanspruchte Bauteile aus Hochleistungsverbundwerkstoffen bereitzustellen, die in der genannten Hinsicht verbessert sind.

Diese Aufgabe wird erfindungsgemäß dadurch gelöst, daß als Kunststoff ein Vinylesterurethanharz eingesetzt wird.

Gegenstand der Erfindung sind demzufolge rohrförmige Bauteile, enthaltend
30 bis 70 Vol.-% orientierte Verstärkungsfasern und
70 bis 30 Vol.-% eines gehärteten Vinylesterurethanharzes.

Vorzugsweise enthält das gehärtete Vinylesterurethanharz

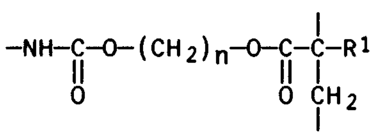

-Gruppen (mit n = 2 oder 3 und $R^1$ = H oder $CH_3$)
Besonders bevorzugte rohrförmige Bauteile zeichnen sich durch folgende Eigenschaften aus:
Interlaminare Scherfestigkeit ILS > 70 [MPa], vorzugsweise > 90 [MPa]
90° - Zugfestigkeit > 55 [MPa], vorzugsweise > 70 [MPa]
Glasübergangstemperatur > 130°C , vorzugsweise > 150°C.

Als Verstärkungsfasern kommen übliche anorganische oder organische Fasern, bevorzugt solche aus Glas, Kohlenstoff oder aromatischem Polyamid in Frage. Wesentlich ist, daß die Fasern entsprechend ihrer Belastungsrichtung definiert orientiert sind. Bevorzugt sind Glasfaserrovings, die nach dem Wickelverfahren abgelegt sind. Die erfindungsgemäßen Bauteile enthalten 30 bis 70, vorzugsweise 50 bis 60 Vol.-% Verstärkungsfasern.

Zu den Ausgangsmaterialien zur Herstellung der Vinylesterurethanharze ist folgendes zu sagen:

Isocyanate

Zur Herstellung der Vinylesterurethanharze im Sinne der Erfindung kommen alle bekannten aliphatischen, cycloaliphatischen und aromatischen Polyisocyanate mit mindestens 2 Isocyanatgruppen pro Molekül in Frage. Beispielhaft für geeignete Isocyanate seien genannt: 4,4-Diphenylmethandiisocyanat (MDI), Hexamethylendiisocyanat, (HDI), Trimethylhexyldiisocyanat (TMDI), Cyclohexyldiisocyanat, Dicyclopentadiendimethylen-diisocyanat, Diisocyanato-diphenylether, Diisocyanatonaphthalin, Diphenylmethan-diisocyanat und Diisocyanato-toluol (TDI) mit ihren Isomerengemischen, Isophorondiisocyanat (IPDI), Dicyclohexyl-diisocyanat, Polyphenylenpolymethylenpolyisocyanate (Roh-MDI);
Triisocyanato-cyclohexan, Triisocyanato-toluol, Triisocyanato-naphthalin, Triisocyanatobiphenyl, Triisocyanato-trimethylbenzol, Triisocyanato-diphenylmethan, Triisocyanato-methyldiphenylmethan, Triisocyanato-triphenylmethan, Triisocyanato-diphenylether, Tetraisocyanato-diphenylsulfid;
urethangruppenhaltige, präpolymere Polyisocyanate wie z.B. das Reaktionsprodukt aus Trimethylolpropan und Diisocyanatetoluol;
trimerisierte, Isocyanuratgruppen enthaltende Polyisocyanate z.B. auf Basis HDI, Diphenylmethan-disocyanat und Isophorondiisocyanat;
präpolymere Polyisocyanate, die dargestellt werden durch Reaktion von Polyisocyanaten mit einem Unterschuß an Polyepoxiden in Gegenwart geeigneter Katalysatoren;
Polyisocyanate, die durch Vorreaktion eines Teils der NCO-Gruppen Carbodiimid- und Urethonimineinheiten enthalten;

sowie Präpolymere, die neben NCO-Gruppen Urethdioneinheiten enthalten.

Bevorzugte Isocyanate sind 4,4'-Diphenylmethandiisocyanat sowie das Isomerengemisch aus 2,2'- und 4,4'-Diphenylmethandiisocyanat.

Mehrwertige Alkohole

Geeignete mehrwertige Alkohole sind: aliphatische Diole, wie Ethandiol-1,2, Propandiol-1,2, Butandiol-1,4, Dipropylenglykol, Neopentylglykol, Trimethylolpropan, Pentaerythrit; alicyclische Diole, wie hydriertes Bisphenol A, Cyclohexandiol, Cyclohexandimethanol und Tricyclohexandimethanol; Phenole wie Bisphenol A oder Resorcin; alkoxylierte Derivate von Bisphenolen wie z.B. Bisphenol A, Bisphenol S oder Bisphenol F; aliphatische oder aromatische Polyetherole mit Molekulargewichten bis 5000, z.B. Polyethylenglykol oder Polypropylenglykol; sowie Polyesterole, wobei sowohl gesättigte als auch ungesättigte hydroxyterminierte Polyester in Frage kommen. Grundsätzlich können auch Aminole, wie Ethanolamin, Propanolamin, Diethanolamin, Triethanolamin und Aminophenole mit den Isocyanaten umgesetzt werden. Bevorzugt ist Dipropylenglykol, gegebenenfalls im Gemisch mit Polypropylenglykol.

Mehrwertige Amine

Als Polyamine können sowohl aliphatische als auch aromatische Amine eingesetzt werden. Beispielhaft seien genannt: Ethylendiamin, Diethylentriamin, Bis-(4-aminocyclohexyl)-methan, Diaminodiphenylmethan, Diaminodiphenylsulfon. Besonders geeignete Amine sind langkettige Amine mit Molekulargewichten von 150 bis 5000. Dazu zählen Etherdiamine wie 4,7-Dioxadecan-1, 10-diamin oder Verbindungen der allgemeinen Formel

$H_2N\text{-}(C_3H_6O)_m\text{-}C_3H_6NH_2$,

wobei m Zahlen von 2 bis 80 bedeutet, oder Verbindungen der allgemeinen Formel

$H_2N\text{-}C_3H_6\text{-}O\text{-}[(CH_2)_4O]_n\text{-}C_3H_6NH_2$,

wobei n Zahlen von 5 bis 80 bedeutet; weiterhin die Aminobenzoesäureester und Anthranilsäureester von Diolen wie z.B. Ethylenglykol, Propylenglykol, Polyethylenglykol, Polypropylenglykol, Polybutadienglykol, Polycaprolactonglykol oder Polytetramethylenetherglykol. Die besonders bevorzugten Aminobenzoesäureester von Polytetramethylenetherglykol haben folgende Struktur:

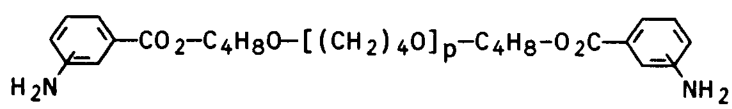

wobei p Zahlen von 5 bis 80 bedeutet.

Hydroxyalkyl-(meth-)acrylate

Zum Aufbau der endständigen Doppelbindungen im Vinylesterurethan werden Hydroxyalkyl-(meth-)acrylate mit den aus A, $B_1$ und $B_2$ hergestellten, Isocyanatgruppen enthaltenden Verbindungen umgesetzt. Hydroxyalkyl(meth-)acrylate werden durch folgende allgemeine Formel beschrieben:

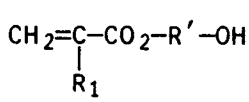

wobei $R_1$ = H oder $CH_3$
und R' eine Alkylengruppe bedeuten. Hydroxyalkyl(meth-)acrylate werden durch Umsetzung von (Meth-)Acrylsäure mit Alkylenoxiden wie Ethylen- oder Propylenoxid hergestellt. Geeignete Hydroxyalkyl-(meth-)acrylate im Sinne der Erfindung sind ferner Glycerindi-(meth-)acrylate, Trimethylolpropan-di(meth-)acrylate

und Pentaerythrittri-(meth-)acrylate. Bevorzugt sind Hydroxypropyl(meth-)acrylat und Hydroxyethyl(meth-)acrylat.

Zur Herstellung der Vinylesterurethanharze sind verschiedene Verfahren möglich. Einmal kann zunächst das Isocyanat A mit dem Hydroxyalkyl-(meth)acrylat C im Molverhältnis von etwa 1:0,5 bis 1:3 vorreagiert und gegebenenfalls anschließend mit dem mehrwertigen Alkohol B1 und/oder dem mehrwertigen Amin B2 umgesetzt werden. In einem zweiten Verfahren werden die Komponenten A, B1 und ggf. B2 im Verhältnis A: (B1 + B2) von 100:0 bis 100:300 vermischt und bei 40 bis 110 ° C umgesetzt. Anschließend wird die zur Absättigung der freien Isocyanatgruppen notwendige Menge den Hydroxyalkyl-(meth)acrylat C zugefügt. Eine weitere Möglichkeit besteht darin, die Komponenten A, B1, B2 und C gemeinsam in einer Eintopfreaktion zum Vinylesterurethanharz umzusetzen. Eventuell vorhandenes, überschüssiges Polyisocyanat reagiert dabei mit dem Hydroxyalkyl(meth)acrylat zu einem verhältnismäßig niedermolekularen Vinylesterurethan, was zur Einstellung der Viskosität des Harzes ausgenutzt werden kann. Man erhält stets ein Gemisch präpolymerer Vinylesterurethane mit unterschiedlicher Kettenlänge und Molekulargewicht. Ein Restgehalt an freien NCO-Gruppen im Vinylesterurethanharz ist in vielen Fällen vorteilhaft, überschüssige NCO-Gruppen können durch chemische Reaktion an OH-aktiven Materialien wie z.B. Glasfasern und Füllstoffen anbinden. Weiterhin kann NCO-haltiges Vinylesterurethanharz mit OH/NH-reaktiven Materialien wie z.B. OH-terminierten ungesättigten Polyestern vernetzen.

Die genannten Umsetzungen können in Substanz oder gegebenenfalls in Monomeren als Lösungsmittel durchgeführt werden. Zur Beschleunigung der Umsetzungen der Isocyanate mit den Alkohol- und Aminoverbindungen können geeignete Katalysatoren, wie sie aus der Polyurethanchemie bekannt sind, eingesetzt werden. Dazu zählen beispielsweise tertiäre Amine wie 1,2-Dimethylimidazol, Diazabicyclooctan, Diazabicyclononan, Triethylendiamin, Metallsalze wie Bleioctoat, Zinnoctoat oder Dibutylzinndilaurat sowie Mischungen von tertiären Aminen und Metallsalzen. Die Katalysatoren werden üblicherweise in Mengen von 0,05 bis 2 Gew.-%, bezogen auf A + B + C, zugegeben. Eine vorzeitige Gelierung der Reaktionsmischung kann durch Zusatz üblicher Inhibitoren wie z.B. Phenothiazin, Hydrochinon, Dimethylhydrochinon, Triphenylphosphit, tert.-Butyl-hydrochinon, Hydrochinonmonomethylether, tert.-Butylbrenzkatechin und p-Benzochinon verhindert werden. Die Inhibitoren werden in Mengen von 0,01 bis 2 Gew.-%, bezogen auf A + B + C, zugesetzt.

Bevorzugt werden zur Herstellung der erfindungsgemäßen rohrförmigen Bauteile Vinylesterurethanharze eingesetzt, die zur Einstellung einer niedrigen Harzviskosität copolymerisierbare Monomere, vorzugsweise in Mengen von 20 bis 60 Gew.% enthalten.

Geeignet sind dabei Vinylverbindungen, wie Styrol, α-Methylstyrol, alkylierte Styrole, Divinylbenzol, Vinylacetat und Vinypyridin; Allylverbindungen, wie Diallylphthalat und Triallylcyanurat; Acryl- und Methacrylverbindungen, wie Acrylnitril, (Meth)acrylamid, Methyl(meth)acrylat, Ethylacrylat, Propylacrylat, Butylacrylat, Ethylhexylacrylat, Neopentylglykolacrylat, Ethylenglykoldi(meth)acrylat, Trimethylolpropantri(meth)-acrylat, Propylenglykoldi(meth)acrylat, Butandioldi(meth)acrylat, Glycerin(meth)crylate, Hydroxyalkyl(meth)-acrylate, alkoxilierte Bisphenol A-di(meth)acrylate und Glycidylmethacrylat, sowie niedermolekulare Maleinimide, wie N-Phenylmaleiimid, N-Alkylmaleinimide und N-Cyclohexylmaleinimid.

Bei der Verwendung von Styrol als Monomer müssen besondere Vorkehrungen bei der Herstellung der Rohre getroffen werden, um die Arbeitsplatzkonzentration möglichst niedrig zu halten. Andererseits erlaubt die Verwendung styrolhaltiger Harze eine höhere Tränkgeschwindigkeit.

Dem Vinylesterurethanharz können in Mengen von 2 bis 50 %, bezogen auf sein Gewicht, andere härtbare Harze, wie ungesättigte Polyester-, Vinylester-, Bismaleinimid- oder Epoxid-Harze zugemischt werden. Zum Zweck der Zähmodifizierung kann das Vinylesterurethanharz 2 bis 40 %, bezogen auf sein Gewicht, eines Thermoplasten, wie Polyamid, Polyester und Polyethersulfon oder eines Kautschuks enthalten.

Zur Aushärtung der Vinylesterurethanharze kommen übliche Polymerisationsinitiatorenin Frage, die dem Harz in Mengen von 0,1 bis 10 Gew.-%, vorzugsweise von 0,5 bis 3 Gew.-%, zugesetzt werden. Als Radikale liefernde Initiatoren seien beispielhaft genannt: Benzoylperoxid, tert.-Butylperoctoat, tert.-Butylperbenzoat, tert.-Butylperoxid, Dicumylperoxid, tert.-Butylcumylperoxid, Di(4-methylbenzoyl)peroxid, Di(tert.-butyl)peroxid oder organische Verbindungen mit einer labilen Kohlenstoff-Kohlenstoff-Bindung.

Zur Herstellung der rohrförmigen Bauteile aus dem Vinylesterurethanharz wird bevorzugt das Filament-Winding-Verfahren angewandt. Dabei werden Faserbündel, sogenannte Rovings, durch ein Tränkbad gezogen, dabei mit dem Harz beladen und dann mit Hilfe einer "Computer-Numercial-Controll"-gesteuertenWickelmaschine definiert auf einem Wickelkern abgelegt. Anschließend wird durch Temperaturerhöhung oder durch Bestrahlung mit UV-Licht das Laminat gehärtet. Mit Hilfe sogenannter Ringfadenaugen ist es möglich, den Wickelkern in einem Arbeitshub vollständig zu bedecken.

Die erfindungsgemäßen Rohre können in verschiedenen Größen hergestellt werden und sowohl in

Lastkraftwagen und Personenautos als auch für Eisenbahnwaggons eingesetzt werden.

Beispiele

A. Herstellung des Vinylesterurethanharzes

130 Teile 4,4'-Diphenylmethandiisocyanat (Lupranat MS, BASF AG) werden bei 50 °C in 90 Teilen Styrol gelöst. Man gibt 0,3 Teile Dibutylzinnlaurat zu und versetzt das Reaktionsgemisch mit 12 Teilen poly-Tetrahydrofuran, welches in 34 Teilen Styrol gelöst wird. Nach 10 Minuten werden bei 50 °C 14 Teile Dipropylenglykol zugefügt und 15 Minuten nachgerührt. Danach dosiert man 120 Teile Hydroxypropylmethacrylat bei 50 bis 60 °C zur Lösung und stabilisiert mit 0,1 Teil Hydrochinon. Es werden 10 Teile Styrol zugefügt.

Danach werden 6 Teile Benzoylperoxid in das Harz (Viskosität 450 mPas bei 23 °C) eingerührt.

B. Herstellung von Rohren

In einem ersten Schritt werden Faserbänder - sogenannte Rovings - von Spulen abgezogen und durch ein harzgefülltes Tränkbad geführt, wo sie mit Harz beladen werden. Zur Einstellung der zu einer guten Benetzung notwendigen niedrigen Harzviskosität wird das Tränkbad auf etwa 35 °C beheizt. Mittels Abstreifdüsen wird der optimale Faservolumenanteil, ca. 55 Vol.%, eingestellt. Die Rovingbündel laufen anschließend durch ein Fadenauge, das CNC-gesteuert die Rovings auf einem rotierenden Wickelkern nach vorausberechnetem Muster ablegt. Als günstig hat sich erwiesen, den Wickelkern auf etwa 50 °C vorzuwärmen. Dies erniedrigt die Harzviskosität, so daß eingeschlossene Luft leicht aus den Rovingbündel entweichen kann. Die Ziehgeschwindigkeit der Rovings beträgt etwa 10 m/min.

Die Aushärtung der aufgebrachten Laminatschichten erfolgt durch Erwärmen auf ca. 120 °C. Nach dem Aushärten des Laminates wird mittels einer hydraulischen Vorrichtung der metallische Wickelkern aus dem ausgehärteten Rohr gezogen. Nach Aufbringen von Trennmittel kann er wieder in die Wickelmaschine eingesetzt und erneut bewickelt werden. Das fertige Rohr wird auf die notwendige Länge geschnitten und zur Befestigung von Krafteinleitungselementen mit Bohrungen oder ähnlichem versehen.

Gemessene Eigenschaften:

| | |
|---|---|
| Interlaminare Scherfestigkeit: | 100 [MPa] |
| 90 °-Zugfestigkeit: | 60 [MPa] |
| Glasübergangstemperatur: | 160 °C. |

**Patentansprüche**

**1.** Rohrförmige Bauteile, enthaltend

30 bis 70 Vol.-% orientierte Verstärkungsfasern und

70 bis 30 Vol.-% eines gehärteten Vinylesterurethanharzes.

**2.** Rohre nach Anspruch 1, dadurch gekennzeichnet, daß das gehärtete Vinylesterurethanharz

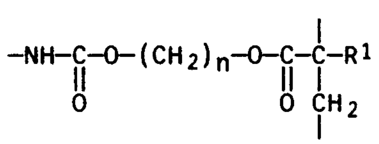

-Gruppen (mit n = 2 oder 3 und $R^1$ = H oder $CH_3$) enthält.

**3.** Rohre nach Anspruch 1, gekennzeichnet durch folgende Eigenschaften:

Interlaminare Scherfestigkeit ILS > 70 [MPa]
90° - Zugfestigkeit > 55 [MPa]
Glasübergangstemperatur > 130°C

**4.** Rohre nach Anspruch 1, dadurch gekennzeichnet, daß das Vinylesterurethanharz hergestellt wurde durch Umsetzung von
A. einem polyfunktionellen Isocyanat,
B1. gegebenenfalls einem mehrwertigen Alkohol und/oder
B2. gegebenenfalls einem mehrwertigen Amin,
C. einem Hydroxyalkyl-(meth)acrylat,
wobei das Gewichtsverhältnis A : ($B_1$ + $B_2$) zwischen 100:0 und 100:300 betrug und das Äquivalentverhältnis Hydroxyalkyl-(meth)acrylat zu den freien Isocyanatgruppen des Reaktionsprodukts A + $B_1$ + $B_2$ zwischen 3:1 und 1:2 lag.